# EUROPEAN PATENT APPLICATION

(11) **EP 2 613 308 A2**
(43) Date of publication of application: **10.07.2013**
(21) Application number: 13000064.9
(22) Date of filing: 08.01.2013
(51) Int. Cl.: G09G 3/36, G06F 3/041

(54) **Display system for tactical environment**

(30) Priority: 09.01.2012 US 201213345798
(71) Applicant: HARRIS CORPORATION, Melbourne, FL 32919 (US)
(72) Inventor: Abbate, Giuseppe, Rochester, New York 14624 (US); Benoit, Mark, Rochester, New York 14624 (US)
(74) Representative: Schmidt, Steffen J.

(57) **Abstract**

Computing device having a display interface compatible with tactical operations. The computing device (101) includes, a transflective liquid crystal display (104), including a backlight (102). A resistive touch screen (108) is disposed on a viewing side (107) of the transflective LCD. At least one processing circuit (117) is coupled to the resistive touch screen and is configured to concurrently sense two or more points of touch contact with a surface of the resistive touch screen. An ambient light sensor (116) is provided for detecting a level of ambient light in an environment of said computing system. Finally, a processing unit (134) is provided that is configured for automatically transitioning the transflective LCD between a reflective operating mode and a transmissive operating mode, responsive to said ambient light sensor.

## Description

### BACKGROUND OF THE INVENTION

### Statement of the Technical Field

The inventive arrangements relate to electronic display systems, and more particularly to rugged electronic display systems that are suited for an outdoor environment.

### Description of the Related Art

Electronic liquid crystal displays (LCDs) are not emissive and therefore do not directly generate light by which the display can be viewed. Accordingly, for such LCDs, some other light source must be provided to facilitate viewing. The light source can include ambient light (e.g., sunlight) or some type of lighting unit that is integrated with the display. An LCD panel can be set up to have one of several different viewing configurations depending on the environment in which the LCD is intended to be used. The viewing mode is determined by the polarizers used in the LCD and the construction of the panel. The three basic viewing modes of an LCD are reflective, transmissive, and transflective.

### SUMMARY OF THE INVENTION

Embodiments of the invention concern a computing system having a display interface compatible with tactical operations. The computing system includes, a transflective liquid crystal display (LCD), including a backlight. A resistive touch screen is disposed on a viewing side of the transflective LCD. At least one processing circuit is coupled to the resistive touch screen and is configured to concurrently sense two or more points of touch contact with a surface of the resistive touch screen. An ambient light sensor is provided for detecting a level of ambient light in an environment of said computing system. Finally, a processing circuit is provided that is configured for automatically transitioning the transflective LCD between a reflective operating mode and a transmissive operating mode, responsive to said ambient light sensor.

### BRIEF DESCRIPTION OF THE DRAWINGS

Embodiments will be described with reference to the following drawing figures, in which like numerals represent like items throughout the figures, and in which:

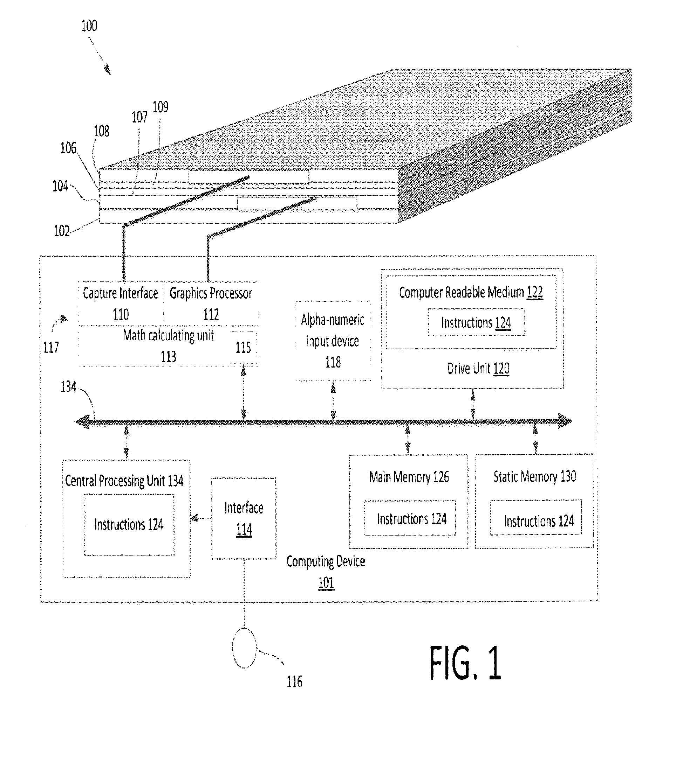

FIG. 1 is a drawing that is useful for understanding a computing system having a transflective liquid crystal display and a touch sensitive interface.

### DETAILED DESCRIPTION

The invention is described with reference to the attached figures. The figures are not drawn to scale and they are provided merely to illustrate the instant invention. Several aspects of the invention are described below with reference to example applications for illustration. It should be understood that numerous specific details, relationships, and methods are set forth to provide a full understanding of the invention. One having ordinary skill in the relevant art, however, will readily recognize that the invention can be practiced without one or more of the specific details or with other methods. In other instances, well-known structures or operation are not shown in detail to avoid obscuring the invention. The invention is not limited by the illustrated ordering of acts or events, as some acts may occur in different orders and/or concurrently with other acts or events. Furthermore, not all illustrated acts or events are required to implement a methodology in accordance with the invention.

A reflective mode LCD does not have an integrated lighting system and instead relies upon an external light source to illuminate the panel. For example, ambient light in a room or from sunlight can be used to illuminate a reflective mode LCD panel. Reflective mode LCD panels are well known in the art and have the advantage of being very energy efficient and of relatively low cost. Reflective LCD also have the advantage of being easily viewed outdoors, even in conditions of bright sunlight.

A transmissive mode LCD uses a backlight to illuminate the display. The light is transmitted through the liquid crystal layer of the panel, out the front, and toward the user. Transmissive mode LCDs are commonly used for portable computing devices and have the advantage of high brightness and good contrast. However, transmissive mode LCDs are known to perform very poorly in brightly lit conditions, especially outdoors. Moreover, these types of screens tend to use significant amounts of power in an attempt to overcome high ambient light conditions.

The transflective LCD combines aspects of reflective mode LCDs and transmissive mode LCDs. These screens offer multiple viewing modes to facilitate operation in conditions of high and low ambient light. In high ambient light conditions, these screens operate in what is essentially a reflective mode, in which information is displayed in high contrast black and white. However, these screens also have a backlight system for use in low light conditions, which provides full color saturation. The result is that the device can be read indoors or outdoors.

A touchscreen display (touchscreen) is an electronic display that detects the presence of a touch (e.g., a finger touch) within the display area of the screen. Touchscreens permit users to interact directly with the information that is displayed instead of using a mouse type pointing device or touchpad. A number of different technologies are available for implementing touchscreen displays.

Multi-touch refers to the ability of a touch screen, or other touch sensitive surface, to concurrently sense two or more points of touch contact with the touch surface. This ability to sense multiple touches concurrently facilitates implementation of certain advanced touchscreen capabilities. For example, multi-touch sensing is sometimes used to implement computer actions in response to sensing a pinching together of a thumb and forefinger on a touchscreen. A pinch gesture can be used to zoom out on an image, whereas a reverse pinch (un-pinch) gesture is sometimes used to enlarge an image. Multi-touch sensing has been implemented in several different ways. For example, capacitive, resistive and optical multi-touch technologies are commercially available for implementing multi-touch input screen. A computer processor is programmed with algorithms which interpret the inputs detected by a touch screen for purposes of implementing single touch and/or multi-touch inputs. Touch sensitive screens and multi-touch sensing are well known in the art and therefore will not be described here in detail.

Resistive touch screen panels are generally the least expensive of the various touch screen technologies, but also have the lowest optical performance. Resistive touch screen panels transmit only about 80% of the display luminance. They also tend to have a high reflectance of incident light. Consequently, resistive touch screen panels are generally considered a poor choice for outdoor applications where high levels of ambient light can make viewing of the displayed image difficult or impossible. These problems can be reduced to some extent by using circular polarizer light traps or custom optical coatings, but these enhancements inevitably tend to increase cost. In contrast, capacitive touch screens can have high optical clarity. However, capacitive touch sensors will only operate when touched by a bare finger or with a conductive stylus held in a bare hand. Accordingly, capacitive touch sensitive screens generally cannot be operated by a user with a gloved hand. Accordingly, the usefulness of capacitive touch screens in outdoor or tactical environments is limited where users need to wear gloves. Another disadvantage of traditional capacitive touch screens, is that it does not work well when wet. Under conditions where the screen is wet, the capacitive touch screen may not be able to detect an input. This is a major disadvantage in a rugged environment where rain and condensation are likely.

The various limitations of touch screen technologies and LCD displays has heretofore limited the usefulness of these products in a tactical environment. Tactical operators need displays that can function effectively in all lighting conditions, and touch screens that will work with or without gloves. Referring now to FIG. 1, there is shown an LCD display system 100 with integrated touchscreen capability that is well suited for operations in conditions of high and low ambient light. The display system includes a transflective LCD panel 104 having a backlight 102. Optically bonded to a front viewing surface of the LCD panel is a resistive touch panel 108. Transflective LCDs are well known in the art, and therefore will not be described here in detail. However, it should be understood that the transflective LCD panel 104 can be any suitable transflective LCD panel as is now known or known in the future. For example, LCD panel model no. PQ 3Qi-01, which is available from Pixel Qi Corporation of San Bruno, California, can be used for this purpose. Any suitable backlight can be used as would be known to those skilled in the art. For example, the backlight 102 can be formed of light emitting diodes (LEDs), a cold cathode fluorescent lamp (CCFL) or an electroluminescent panel (ELP).

Resistive touch panels are known in the art and therefore will not be described here in detail. However, it should be understood that the resistive touch panel 108 can include any resistive type multi-touch panel that is known now or in the future. For example, multi-touch resistive touch panels of this type are commercially available from Gunze Electronics USA of Austin, Texas under technology license from Stantum of Bordeaux, France. This panel technology, which is commonly referred to as Digital Multi-Touch Resistive (DMR) or "digital matrix resistive," uses a finely pitched matrix of resistors embedded within the panel to provide a larger number of touch points as compared to conventional analog multi-touch resistive panels. In some embodiments, the resistive touch panel can include one or more optical coating layers (not shown) configured to improve transmission of visible light through the resistive touch panel 108. Other coatings may also be provided, such as an anti-smudge (AS, hydrophobic) coating and/or an anti-glare (AG) coating.

The resistive touch panel can be optically bonded to the LCD display panel using any suitable optical bonding system as would be known to those skilled in the art. As used herein, the phrase "optical bonding" means the use of an optical-grade adhesive 106 to adhere the resistive touch panel 108 to the top surface 107 of the LCD panel 104. As will be readily appreciated by those skilled in the art, optical bonding eliminates any air gap which may exist between the top surface of the LCD panel and the resistive touch panel. This arrangement has the advantage of eliminating two reflective surfaces. Still, optical bonding can be omitted in some embodiments. Also, an electromagnetic interference filter can be disposed between said LCD panel 104 and said touch panel 108.

Multi-touch resistive touch screen panels are known in the art, and therefore will not be described here in detail. In general, however, the panel 108 can comprise a multi-contact bidirectional sensor for acquisition of tactile information. A computing device 101 associated with the display system 100 has a memory 126 for recording the position of graphical objects (not shown) which are displayed on the LCD panel 104, and at least one processing rule (e.g., instructions 128) associated with each such graphical object. A math calculating unit 113 analyzes positions of acquired tactile information based on user interactions with the resistive touch panel 108. Based on such analysis, the math calculating unit applies a processing rule as a function of the position of such tactile interaction relative to the position of the graphical objects. The math calculating unit and graphics processor can communicate with the main memory 126 and central processing unit 134 by means of a communication interface 115 and system bus 134, or by any other data communications means as would be known to those skilled in the art.

Transflective LCD display screens and resistive multi-touch touch sensitive screens are each known individually in the art. However, the unique advantages of combining the two technologies has been previously unrecognized with respect to rugged tactical computing systems that must function in all kinds of weather and all lighting conditions - including complete darkness. Instead, efforts to provide similar capabilities have relied upon reflective or transmissive LCD displays with capacitive touch screen overlays. The invention thus provides a display system that offers low power consumption, high resolution, all weather operation (i.e., user can wear gloves), all lighting condition functionality, combined with a multi-touch interface that is ideal for rugged outdoor and military operations. No other display system offers equivalent performance.

The computing device 101 can comprise various types of computing systems and devices, including a personal computer (PC), a tablet PC, a laptop computer, a desktop computer, a control system, a communications transceiver, or any other device capable of executing a set of instructions (sequential or otherwise) that specifies actions to be taken by that device. It is to be understood that a computing device of the present disclosure can also include other electronic devices that can provides voice, video or data communication.

An ambient light sensor 116 is provided for detecting when the LCD display of FIG. 1 is being used in conditions of high ambient light and low level ambient light. The ambient light sensor can be a photocell or solid state sensing device capable of detecting ambient light conditions. The computing system can also include at least one processing unit for evaluating the level of ambient light and comparing the level of ambient light to at least one threshold value. For example, the central processing unit 134 can perform this processing function. Based on such evaluation, the processing unit can advantageously selectively cause the transflective LCD display 100 to operate in either the reflective viewing mode or transmissive viewing mode. For example, the transflective display can be caused to operate in the transmissive viewing mode when the ambient light sensor senses that the unit is operating in conditions of low ambient light levels as might be found in an indoor environment. Conversely, the transflective display can be caused to operate in a reflective mode when high ambient light levels as may be found in an outdoor environment are detected.

According to one embodiment of the invention, the processing system can also selectively cause the display to operate in a reflective mode when the display is to be used with night vision goggles (NVG). A advantage of the reflective mode LCD is that, in addition to reflecting visible light, it can also be designed to reflect infrared light. For example, such infrared reflectance can be achieved using cholesteric LCD (Ch-LCD) technology, as is known in the art. Accordingly, the display system can effectively be used with in high ambient light conditions, low ambient light conditions, and under conditions where tactical operations and/or security dictate the absence of any visible light including artificial backlighting of the LCD panel. In some embodiments, the reflective mode for such conditions can be automatically selected by the processing circuit based on the ambient light sensor. Alternatively, the reflective mode under such conditions can be manually selected in response to a user input to the computing device. For example, the user input can be provide by means of an alpha-numeric input device 118.

The computing device 101 will now be described in further detail. The system includes a central processing unit 134, a touch screen graphics processing unit (TSGPU) 117, a main memory 126 and a static memory 130, which communicate with each other via system bus 134. The computing device 101 can communicate with the display unit 101 for displaying information and sensing user touch interaction as described above with respect to FIG. 1. The computing device 101 can include an input device 118 (e.g., a keyboard), a cursor control device such as a mouse (not shown), and a disk drive unit 120.

The disk drive unit 120 includes a computer-readable storage medium 122 on which is stored one or more sets of instructions 124 (e.g., software code) configured to implement one or more of the methodologies, procedures, or functions described herein. The instructions 124 can also reside, completely or at least partially, within the main memory 126, the static memory 130, and/or within the central processing unit 134 during execution thereof by the computing device 101. The main memory 126 and the central processing unit 134 also can constitute machine-readable media.

Dedicated hardware implementations including, but not limited to, application-specific integrated circuits, programmable logic arrays, and other hardware devices can likewise be constructed to implement the certain methods described herein. Applications that can include the apparatus and systems of various embodiments broadly include a variety of electronic and computing devices. Some embodiments implement functions in two or more specific interconnected hardware modules or devices with related control and data signals communicated between and through the modules, or as portions of an application-specific integrated circuit. Thus, the exemplary system is applicable to software, firmware, and hardware implementations.

While the computer-readable storage medium 122 is shown in an exemplary embodiment to be a single storage medium, the term "computer-readable storage medium" should be taken to include a single medium or multiple media (e.g., a centralized or distributed database, and/or associated caches and servers) that store the one or more sets of instructions. The term "computer-readable storage medium" shall also be taken to include any medium that is capable of storing, encoding or carrying a set of instructions for execution by the machine and that cause the machine to perform any one or more of the methodologies of the present disclosure.

The term "computer-readable medium" shall accordingly be taken to include, but not be limited to, solid-state memories such as a memory card or other package that houses one or more read-only (non-volatile) memories, random access memories, or other re-writable (volatile) memories; magneto-optical or optical medium such as a disk or tape; as well as carrier wave signals such as a signal embodying computer instructions in a transmission medium; and/or a digital file attachment to e-mail or other self-contained information archive or set of archives considered to be a distribution medium equivalent to a tangible storage medium. Accordingly, the disclosure is considered to include any one or more of a computer-readable medium or a distribution medium, as listed herein and to include recognized equivalents and successor media, in which the software implementations herein are stored.

Those skilled in the art will appreciate that the computing device architecture illustrated in FIG. 1 is one possible example of a computing device. However, the invention is not limited in this regard and any other suitable computing device architecture can also be used without limitation.

Applicants present certain theoretical aspects above that are believed to be accurate that appear to explain observations made regarding embodiments of the invention. However, embodiments of the invention may be practiced without the theoretical aspects presented. Moreover, the theoretical aspects are presented with the understanding that Applicants do not seek to be bound by the theory presented.

While various embodiments of the present invention have been described above, it should be understood that they have been presented by way of example only, and not limitation. Numerous changes to the disclosed embodiments can be made in accordance with the disclosure herein without departing from the spirit or scope of the invention. Thus, the breadth and scope of the present invention should not be limited by any of the above described embodiments. Rather, the scope of the invention should be defined in accordance with the following claims and their equivalents.

Although the invention has been illustrated and described with respect to one or more implementations, equivalent alterations and modifications will occur to others skilled in the art upon the reading and understanding of this specification and the annexed drawings. In addition, while a particular feature of the invention may have been disclosed with respect to only one of several implementations, such feature may be combined with one or more other features of the other implementations as may be desired and advantageous for any given or particular application.

The terminology used herein is for the purpose of describing particular embodiments only and is not intended to be limiting of the invention. As used herein, the singular forms "a", "an" and "the" are intended to include the plural forms as well, unless the context clearly indicates otherwise. Furthermore, to the extent that the terms "including", "includes", "having", "has", "with", or variants thereof are used in either the detailed description and/or the claims, such terms are intended to be inclusive in a manner similar to the term "comprising."

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

## Claims

1. A computing system, comprising:
a transflective liquid crystal display (LCD), including a backlight; and
a resistive touch screen disposed on a viewing side of the LCD; and
at least one processing circuit coupled to said resistive touch screen and configured to concurrently sense two or more points of touch contact with a surface of said resistive touch screen;
an ambient light sensor for detecting a level of ambient light in an environment of said computing system; and
a processing circuit configured for automatically transitioning said transflective LCD between a reflective operating mode and a transmissive operating mode, responsive to said ambient light sensor.

2. The computing system according to claim 1, wherein said resistive touch screen is a multi-contact bi-directional sensor for configured for acquisition of tactile information.

3. The computing system according to claim 2, wherein said computing system is responsive to a pinch gesture and an un-pinch gesture for zooming out and zooming in, respectively, on subject matter displayed on said LCD.

4. The computing system according to claim 1, wherein said computing system is a tablet computer.

5. The computing system according to claim 1, wherein said computing system is a radio transceiver.

6. The computing system according to claim 1, further comprising an electromagnetic interference filter is disposed between said transflective LCD and said resistive touch screen.

7. The computing system according to claim 1, wherein said transflective LCD screen is reflective of ambient infrared radiation when operating in said reflective operating mode.

8. The computing system according to claim 7, wherein said LCD screen is formed of a cholesteric LCD.

9. The computing system according to claim 7, wherein said a processing circuit is configured for automatically transitioning said transflective LCD to a reflective operating mode when operating in the absence of ambient light for accommodating night vision operations.
